(19) Europäisches Patentamt
European Patent Office
Office européen des brevets

(11) Publication number: 0 355 991 B1

(12) # EUROPEAN PATENT SPECIFICATION

(45) Date of publication of patent specification: 16.08.95

(51) Int. Cl.[6]: C09J 183/07

(21) Application number: 89307322.1

(22) Date of filing: 19.07.89

(54) **Silicone-based pressure-sensitive adhesives having high solids content.**

(30) Priority: 04.08.88 US 228282

(43) Date of publication of application:
28.02.90 Bulletin 90/09

(45) Publication of the grant of the patent:
16.08.95 Bulletin 95/33

(84) Designated Contracting States:
CH DE ES FR GB IT LI NL SE

(56) References cited:
EP-A- 0 158 459
EP-A- 0 175 355
EP-A- 0 240 162
EP-A- 0 269 454
FR-A- 2 413 439

(73) Proprietor: MINNESOTA MINING AND MANUFACTURING COMPANY
3M Center,
P.O. Box 33427
St. Paul,
Minnesota 55133-3427 (US)

(72) Inventor: Boardman, Larry D. c/o Minnesota Mining and
Manufacturing Company
2501 Hudson Road
St. Paul
Minnesota 55144-1000 (US)

(74) Representative: Baillie, Iain Cameron et al
c/o Ladas & Parry
Altheimer Eck 2
D-80331 München (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 355 991 B1

## Description

BACKGROUND OF THE INVENTION

1. Field of the Invention

This invention relates to organopolysiloxane compositions and, more particularly, to such compositions that can be cured to produce pressure-sensitive adhesives.

2. Description of the Prior Art

Silicone-based pressure-sensitive adhesives are well known and are commonly prepared by blending copolymeric resins containing triorganosiloxy units and $SiO_{4/2}$ units with silanol endblocked polydiorganosiloxanes, such as taught in U.S. Patent Nos. 2,736,721, 2,814,601, and 2,857,356.

More recently, organopolysiloxane compositions that are prepared by reacting organopolysiloxanes containing olefinic unsaturation with organopolysiloxanes containing silicon-bonded hydrogen in the presence of a hydrosilation catalyst have been developed for use as molding resins, elastomers, release surfaces, and adhesives. See, for example, U.S. Patent Nos. 3,690,073, 4,208,504, 4,248,750, and 4,386,135.

The use of a substantially linear diorganohydrogensiloxy endblocked polydiorganosiloxane in combination with a substantially linear diorganovinylsiloxy endblocked polydiorganosiloxane to simulate a high molecular weight polydiorganosiloxane gum while maintaining a low viscosity has been described. See, for example, U.S. Patent Nos. 3,699,073, 4,340,709, 4,535,141, and 4,426,240.

EP-A-0,158,459 which makes disclosures which correspond to the disclosure of US Patent No. 4,535,141 mentioned above discloses curable polyorganosiloxane compositions that can be cured to yield readily deformable, tough, elastomeric gels which compositions comprise a liquid triorganosiloxy endblocked polydimethylsiloxane containing terminal vinyl radicals, a resinous organosiloxane polymer containing dimethylvinylsiloxy, trimethylsiloxy and $SiO_{4/2}$ groups, a polyorganosiloxane containing at least 3 silicon-bonded hydrogen atoms per molecule, a substantially linear polydimethylsiloxane containing dimethylhydrogensiloxy terminal groups and a catalyst to promote curing of said composition. There is no disclosure of the particular amounts of benzene soluble resinous copolymer useful in the subject invention.

EP-A-0,175,355 discloses silicone compositions which comprise a liquid silicone resin, a vinyl-containing silicone resin, a siloxane polymer and a hydrosilylation catalyst. The compositions cure to give unusually strong, fuel resistant coatings and elastomers. Again there is no disclosure of the particular amounts of benzene soluble resinous copolymer useful in the subject invention.

The curing of silicone-based adhesive compositions by means of a hydrosilation reaction has also been disclosed. See, for example, U.S. Patent Nos. 4,051,454 and 3,983,298.

While the hydrosilation reaction of alkenylsiloxanes with hydrosilanes in the presence of a suitable catalyst has been used to prepare patting, molding, and elastomeric products as well as materials useful for providing substrates with a release surface, the reaction has been used only to a limited extent to provide pressure-sensitive adhesives.

SUMMARY OF THE INVENTION

The present invention provides an organopolysiloxane composition having high solids content, which composition can be cured to produce a pressure-sensitive adhesive. The composition is capable of being cured to form a pressure-sensitive adhesive and comprises a flowable mixture of:

(a) 50 to 65 parts by weight of a benzene soluble, resinous copolymer having triorganosiloxy and $SiO_{4/2}$ units,

(b) a diorganoalkenylsiloxy endblocked polydiorganosiloxane having the average formula

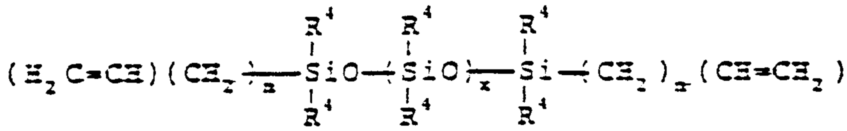

wherein

each $R^4$ independently represents a monovalent group selected from alkyl groups and aryl groups, with at least 70 percent of the $R^4$ groups being methyl,

x is zero or a number having a value up to 1000,

n is zero or a number having a value up to 16.

(c) a diorganohydrogensiloxy endblocked polydiorganosiloxane having the average formula

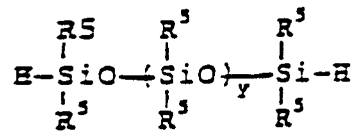

wherein

each $R^5$ independently represents a monovalent group selected from alkyl groups and aryl groups, with at lease 70 percent of the $R^5$ groups being methyl, and

y is zero or a number having a value up to 1000.

(d) an organosilicon crosslinking agent containing more than two groups that will react with a silicon-bonded hydrogen or a diorganohydrogensiloxy endblocked polydiorganosiloxane by means of a hydrosilation reaction, the sun of parts by weight of said (b) diorganoalkenylsiloxy endblocked polydiorganosiloxane plus said (c) diorganohydrogensiloxy endblocked polydiorganosiloxane plus said (d) organosilicon crosslinking agent being 50 to 35 parts by weight, and

(e) a hydrosilation catalyst in an amount sufficient to effect the curing of said composition.

The composition of the present invention can be cured by exposure to ultraviolet radiation or visible light or by heating. The properties of the adhesive, e.g. adhesive strength, shear strength, and tack, can be varied merely by changing the relative concentration of ingredients in the composition.

The major advantage of the present invention is that solvent need not be used to apply the composition. This results in a saving of material, i.e. the solvent, a saving of time, i.e. drying time, a saving of energy, i.e., shorter drying cycle and less solvent to recover, and a reduction in health and safety hazards.

## DETAILED DESCRIPTION OF THE INVENTION

The present invention provides an organopolysiloxane composition that can be cured to produce a pressure-sensitive adhesive. The composition comprises:

(a) specified amounts (50 to 65 parts by weight) of a benzene soluble, resinous copolymer having triorganosiloxy units and $SiO_{4/2}$ units wherein said triorganosiloxy units are preferably $R^1R^2R^3SiO_{1/2}$ units wherein $R^1$, $R^2$, and $R^3$ independently represent monovalent hydrocarbyl radicals, preferably containing no more than eighteen carbon atoms, there being preferably from 0.6 to 1.0 $R^1R^2R^3SiO_{1/2}$ unit for every $SiO_{4/2}$ unit, wherein preferably at least 95 percent of all $R^1$, $R^2$, and $R^3$ radicals are methyl and the total number of $R^1$, $R^2$, and $R^3$ radicals that have olefinic unsaturation are preferably no more than 0.5 percent of all $R^1$, $R^2$, and $R^3$ radicals,

(b) a substantially linear, diorganoalkenylsiloxy endblocked polydiorganosiloxane, essentially free of cyclics, having the average formula

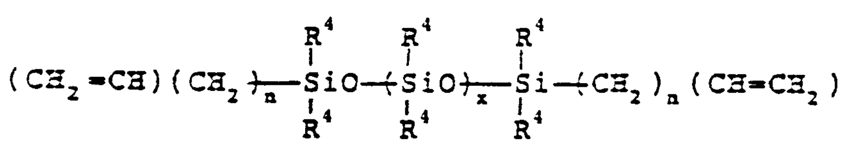

wherein each $R^4$ independently represents a monovalent hydrocarbyl radical selected from alkyl groups, preferably having from 1 to 18 carbon atoms, and aryl groups, preferably phenyl, at least 70 percent of all $R^4$ radicals being methyl, x represents a number ranging from 0 to 1000, preferably from 15 to 50, and n represents a number ranging from 0 to 16,

(c) a substantially linear diorganohydrogensiloxy endblocked polydiorganosiloxane, essentially free of cyclics, having the average formula

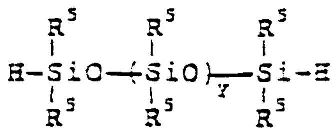

wherein $R^5$ independently represents a monovalent hydrocarbyl radical selected from alkyl groups, preferably having from 1 to 18 carbon atoms, and aryl groups, preferably phenyl, at least 70 percent of all $R^5$ radicals being methyl, and y represents a number ranging from 0 to 1000, preferably from 15 to 50,

(d) an organosiloxane crosslinking agent containing more than two groups that will react with a silicon bonded hydrogen of a diorganohydrogensiloxy endblocked polydiorganosiloxane by means of a hydrosilation reaction, the ratio of the total number of alkenyl groups present in (d) and (b) to the total number of silicon-bonded hydrogen atoms present in (d) and (c) preferably ranging from 0.8 to 1.2, and

(e) a hydrosilation catalyst in an amount sufficient to effect the curing of said composition. The components (b), (c) and (d) are also present in specified concentrations: the sum of parts by weight of (b) + (c) + (d) being 50 to 35.

The compositions of the present invention can optionally contain additional components such as hydrosilation inhibitors, to extend the pot life of the compositions, photosensitizers, solvents, or fillers, such as, for example, silica, glass microbubbles, or organic polymeric fibers.

Resinous copolymers (a) consisting of $R^1R^2R^3SiO_{1/2}$ units and $SiO_{4/2}$ units are well known in the art. These copolymers are described, for example, in U.S. Patent Nos. 3,936,582, 2,676,182, and 2,857,356. The resinous copolymers cam be prepared by cohydrolysis of a mixture of silanes having four hydrolyzable groups, e.g. silicon tetrachloride, and triorganosilanes having one hydrolyzable group, e.g. trimethylchlorosilane, in the proper ratio. A preferred method for the preparation of these resinous copolymers is described in U.S. Patent No. 2,676,182, wherein a silica hydrosol is reacted under acidic conditions with a source of triorganosiloxy units such as a hexaorganodisiloxane, for example, hexamethyldisiloxane, or a hydrolyzable triorganosilane, for example, trimethylchlorosilane, or mixtures thereof.

The resins obtained from these preparations typically contain from 0.6 to 0.9 triorganosiloxy unit for every $SiO_{4/2}$ unit and contain silicon-bonded hydroxyl radicals ranging from 1 to 4 percent by weight of the copolymer.

The diorganoalkenylsiloxy endblocked polydiorganosiloxanes (b) are also well known. They can be prepared by the conventional method of cohydrolysis of a mixture of diorganoalkenylsilanes having one hydrolyzable group and one or more diorganosilanes having two hydrolyzable groups, in the proper ratio.

For example, cohydrolysis of a mixture of two (2) moles of diorganoalkenylchlorosilane with no diorganodichlorosilane would give a diorganoalkenylsiloxy endblocked polydiorganosiloxane in which x is zero; cohydrolysis of a mixture of two (2) moles of diorganoalkenylchlorosilane with 20 moles of diorganodichlorosilane would give a diorganoalkenylsiloxy endblocked polydiorganosiloxane in which x has an average value of about 20. Examples of hydrolyzable organosilanes suitable for this invention other than the organochlorosilanes include the organobromosilanes and the organoacetoxysilanes. Examples of preferred hydrolyzable organosilanes are vinyldimethylchlorosilane, (5-hexenyl)dimethylchlorosilane, dimethyldichlorosilane, methylphenyldichlorosilane, and diphenyldichlorosilane. The hydrolyzable organosilanes and the ratios thereof should be selected so that at least 70 percent of the organo groups obtained in the diorganoalkenylsiloxy endblocked polydiorganosiloxane are methyl groups. A preferred method for the preparation of diorganoalkenylsiloxy endblocked polydiorganosiloxanes is by equilibration in the presence of an acid or base catalyst of a mixture of a 1,3-dialkenyltetraorganodisiloxane, such as 1,3-divinyltetramethyldisiloxane, and a polyorganocyclopolysiloxane, such as hexamethylcyclotrisiloxane or octamethylcyclotetrasiloxane.

The diorganohydrogensiloxy endblocked polydiorganosiloxanes (c) are also well known in the art. They can be prepared by conventional methods that are analogous to the methods for preparing the diorganoalkenylsiloxy endblocked polydiorganosiloxanes, but by using in the cohydrolysis process a hydrolyzable diorganohydrogensilane, such as dimethylchlorosilane, in place or the hydrolyzable diorganoalkenylchlorosilane and in the equilibration process a 1,1,3,3-tetraorganodisiloxane, such 1,1,3,3-tetramethyldisiloxane, in place of the 1,3-dialkenyltetraorganodisiloxane.

Crosslinking agents (d) that are suitable for the composition of the present invention can be selected from low and high molecular weight polyorganosiloxanes having the general formulae

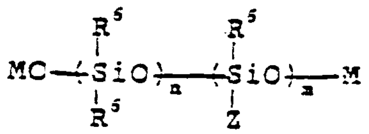

and

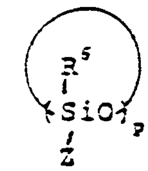

wherein each $R^6$ independently represents a monovalent saturated hydrocarbyl group selected from alkyl groups, preferably having 1 to 18 carbon atoms, and aryl groups, preferably phenyl, each M independently represents a silyl group selected from $R^aR^bR^cSi$ and $R^dR^eZSi$, each of $R^a$, $R^b$, $R^c$, $R^d$, and $R^e$ independently represents a monovalent hydrocarbyl group selected from alkyl groups, preferably having 1 to 18 carbon atoms, and aryl groups, preferably phenyl, Z represents a group reactive in a hydrosilation reaction with a silicon-bonded hydrogen atom, preferably selected from a vinyl group, n represents a number from 0 to 1,000, m represents a number from 0 to 1,000, and p represents the number 3 or 4, with the proviso that the number of Z groups is a number greater than 2 but preferably less than 1,000, more preferably between 3 and 50. The crosslinking agents (d) can be prepared by conventional methods analogous to the procedures for preparing the diorganoalkenylsiloxy and diorganohydrogensiloxy endblocked polydiorganosiloxanes mentioned previously. For example, a mixture of organohydrogensilanes or organoalkenylsilanes or both, and optionally diorganosilanes, each having two hydrolyzable groups, can be cohydrolyzed with endstopping organosilanes having only one hydrolyzable group including diorganohydrogensilanes and diorganoalkenylsilanes.

Examples of organosilanes having two hydrolyzable groups suitable for the cross-linking agent of this invention are methyldichlorosilane, phenyldichlorosilane, methylvinyldichlorosilane, and dimethyldichlorosilane. Examples of organosilanes having only one hydrolyzable group suitable for the cross-linking agent of this invention are dimethylchlorosilane, dimethylvinylchlorosilane, and trimethylchlorosilane. Other organosilanes having one and two hydrolyzable groups can be used as can organosilanes having hydrolyzable groups other than the chloro group, such as, for example, bromo, acetoxy and alkoxysilanes.

Crosslinking agents (d) are well known and can be obtained commercially. Two examples are 1,3,5,7-tetravinyltetramethylcyclotetrasiloxane, available from Petrarch Systems, Inc. and polymethylhydrogensiloxane, available as DC-1107 from Dow Corning Corporation.

It is preferred that the relative amounts of components (b), (c), and (d) be chosen so that the total number of equivalents of alkenyl groups in the composition is approximately equal to the total number of equivalents of silicon-bonded groups reactive with the alkenyl group in a hydrosilation reaction. However, up to a 20% excess, preferably up to a 10% excess, of either the alkenyl group or the silicon-bonded group reactive with the alkenyl group, i.e., silicon-bonded hydrogen, can be present in the composition.

The hydrosilation catalyst can be any compound that will catalyze the addition reaction of silicon-bonded hydrogen atoms with olefinic double bonds.

Examples of hydrosilation catalysts suitable for the composition of this invention include many of the noble metals, such as rhodium, nickel, palladium, and platinum, and their organometallic complexes. Preferred catalysts are those containing the element platinum, such as finely divided platinum metal, platinum on a finely divided carrier such as charcoal or alumina, and compounds of platinum such as chloroplatinic acid, platinum olefin complexes, such as those described in U.S. Patent No. 3,159,601, platinum alkyne complexes, such as those described in U.S. Patent No. 4,603,215, the reaction product of chloroplatinic acid with a member selected from the class consisting of alcohols, ethers, aldehydes and mixtures thereof, such as those described in U.S. Patent No. 3,220,972, and the reaction product of chloroplatinic acid with tetravinyltetramethylcyclotetrasiloxane in the presence of sodium bicarbonate in ethanol solution, such as those described in U.S. Patent No. 3,715,334. Particularly preferred catalysts are the complexes prepared from chloroplatinic. acid and certain unsaturated organosilicon compounds, such as those described in U.S. Patent No. 3,419,593, for example, the reaction product of chloroplatinic acid and sym-divinyltetramethyldisiloxane. Another particularly preferred catalyst is a colloidal hydrosilation catalyst provided by the reaction between a silicon hydride or a siloxane hydride and a platinum (0) or platinum (II) complex, such as those disclosed in U.S. Patent No. 4,705,765. Still other particularly preferred catalysts are those which are activated by actinic radiation, such as the (cyclooctadienyl)diarylplatinum complexes and the ($\eta$5-cyclopentadienyl)trialkylplatinum complexes described in U.S. Patent Nos. 4,530,879 and 4,510,094, respectively.

Depending on the hydrosilation catalyst employed, it may be desirable to include a hydrosilation inhibitor to extend the pot life of the formulation. Hydrosilation inhibitors are well known in the art and

include such compounds as acetylenic alcohols, certain polyolefinic siloxanes, pyridine, acrylonitrile, organic phosphines and phosphites, unsaturated amides, and alkyl maleates.

The compositions of this invention can be prepared by combining the resinous copolymer, as a solution state, in a solvent such as toluene or xylene, with the diorganoalkenylsiloxy endblocked polydiorganosiloxane, the diorganohydrogensiloxy endblocked polydiorganosiloxane, and the crosslinking agent, removing the solvent by a suitable method, such as heating the mixture under reduced pressure, and finally adding the hydrosilation catalyst. If one or more of the components (b), (c) or (d) is a low molecular weight material, such as tetravinyltetramethylcyclotetrasiloxane (which can be employed as the crosslinking agent), it is preferable to add these components after removal of solvent from the mixture of (a) and the other components.

If the composition of the invention is not to be used immediately, it is preferable to prepare the composition in two parts. This can be accomplished by first combining part of component (b) with components (a), (c), and (d) and removing the solvent as described above to provide the first part. If the crosslinking agent (d) is a low molecular weight material, it can be added after removal of solvent from the mixture. The second part is provided by combining the remainder of component (b) with the catalyst (e). The compositions of the invention can be provided by simply mixing the two parts.

The composition can be applied to a support by any suitable method, such as, for example, spreading, rolling, etc. The support and the substrate to which the support is adhered can be any solid material, such as a metal, for example, aluminum or steel, a porous material, such as paper, wood, or fabrics, an organic polymeric material, such as polyester, polyamide, polyolefin, etc., a painted surface, or a siliceous material, such as concrete or glass. It is often advantageous to use a flexible substrate. Once applied, the composition can be cured under conditions appropriate to the hydrosilation catalyst employed. For example, if the catalyst is the reaction product of chloroplatinic acid and sym-divinyltetramethyldisiloxane, the composition can be cured slowly at room temperature or rapidly by heating. If the catalyst is a ($\eta$5-cyclopentadienyl)trialkylplatinum complex, the composition can be cured by exposure to actinic radiation, optionally followed by heating.

The major advantage of the adhesive composition of the present invention is that it has an extremely high solids content, typically in excess of 95% by weight, preferably in excess of 98% by weight. Conventional silicone-based pressure-sensitive adhesive compositions have a solids content ranging from 30% by weight to 50% by weight. The accompanying reduction in solvent concentration leads to savings of material, i.e. less solvent being required, savings of time, i.e. less drying time is required, savings of energy, i.e. a shorter drying cycle is required as there is less solvent to recover. In addition, the reduction in solvent concentration results in a reduction in health and safety hazards.

In order that those skilled in the art may better understand the present invention, the following non-limiting examples are given to illustrate the invention. The following preparations demonstrate the preparation of four of the components of the compositions of this invention.

Preparation A

Resinous Copolymer

A benzene soluble, resinous copolymer consisting essentially completely of trimethylsiloxy units and $SiO_{4/2}$ units was prepared according to U.S. Patent No. 2,676,182.

A xylene solution of the resinous copolymer contained 60.0 percent by weight non-volatile resin copolymer. $^{29}Si$ NMR analysis indicated the presence of $CH_3SiO_{1/2}$, $SiO_{5/2}H$ and $SiO_{4/2}$ units in a ratio of 41.6:10.5:47.6, corresponding to a hydroxyl content of 2.6 percent by weight. The copolymer exhibited a number average molecular weight, determined by gel permeation chromatography, of about 2,600 and a dispersity index of 2.6.

Preparation B

Dimethylvinylsiloxy Endblocked Polydimethylsiloxane

A mixture of octamethylcyclotetrasiloxane (1,600 g, 5.384 mol), 1,3-divinyltetramethyldisiloxane (160.9 g, 0.863 mol), concentrated $H_2SO_4$ (1.8 g), and activated carbon (8.8 g) was heated at 100 °C under mechanical stirring for 12 hours. The reaction mixture was filtered, and the filtrate was stripped of volatiles using a thin film evaporator at 250 °C. The polymer obtained (1,350 g) was shown by $^1H$ NMR to have an average degree of polymerization of 27.3.

Preparation C

Dimethylhydrogensiloxy Endblocked Polydimethylsiloxane

A mixture of octamethylcyclotetrasiloxane (1,539 g, 5.188 mol), 1,1,3,3-tetramethyldisiloxane (134.4 g, 1.001 mol), concentrated $H_2SO_4$ (1.8 g), and activated carbon (8.7 g) was treated in the same manner as described in Preparation B. The polymer obtained (1,300 g) was shown by $^1H$ NMR to have an average degree of polymerization of 23.1.

Preparation D

($\eta$5-Cyclopentadienyl)trimethylplatinum

To a slurry of $K_2PtCl_6$ (8.30 g, 17.1 mmol) in a 1:1 mixture of tetrahydrofuran and benzene (170 mL) at 0 °C was added a 1.5 formal solution of methyllithium in diethyl ether (91.0 mL, 136.5 mmol) dropwise with stirring. After the addition was complete, the reaction mixture was allowed to warm slowly to room temperature and stirred overnight. After cooling to 0 °C, excess methyllithium was quenched by the dropwise addition of 1,2-dibromoethane (7.3 mL). A saturated solution of potassium iodide in 1 N hydrochloric acid (250 mL) was added dropwise, and the mixture was stirred at 0 °C for 1 hour. Sufficient water was added to dissolve precipitated salts, the organic phase was separated, and the aqueous phase was extracted twice with diethyl ether. The combined organic phases were washed with water and saturated aqueous sodium chloride, dried over magnesium sulfate, and concentrated. The crude product crystallized from a 1:1 mixture of hexane and toluene to give iodotrimethylplatinum tetramer as red-brown crystals (5.58 g, 89 %). To a slurry of the tetramer (3.66 g, 2.5 mmol) in a 1:1 mixture of tetrahydrofuran and toluene (60 mL) at room temperature was added a 1.9 formal solution of cyclopentadienylsodium in tetrahydrofuran (6.32 mL, 12.0 mmol) dropwise with stirring. After stirring for 1 hour, the reaction mixture was poured into water, the aqueous phase was extracted twice with diethyl ether, and the combined organic phases were washed with saturated aqueous sodium chloride, dried over magnesium sulfate, and concentrated. Flash chromatography (silica, hexane) afforded the desired complex as a colorless solid (2.79 g, 91 %).

EXAMPLES 1 - 15

The following examples illustrate the preparation of adhesives containing varying amounts of resinous copolymer and varying amounts of crosslinking agent. A mixture of 350 g of the 60 percent by weight solution of resinous copolymer of Preparation A, 53.5 g of the dimethylvinylsiloxy endblocked polydimethylsiloxane of Preparation B, and 77.9 g of the dimethylhydrogensiloxy endblocked polydimethylsiloxane of Preparation C was stripped of volatile material by heating at 65 °C under < 0.5 mm of Hg pressure on a rotary evaporator. To the resulting viscous mixture was added 2.10 g of 1,3,5,7-tetravinyltetramethylcyclotetrasiloxane, and the resulting composition was designated Base 1.

A mixture of 350 g of the 60 percent by weight solution of resinous copolymer of Preparation A, 35.5 g of the dimethylvinylsiloxy endblocked polydimethylsiloxane of Preparation B, and 93.0 g of the dimethylhydrogensiloxy endblocked polydimethylsiloxane of Preparation C was treated similarly and combined with 4.90 g of 1,3,5,7-tetravinyltetramethylcyclotetrasiloxane, and the resulting composition was designated Base 2.

A catalyst solution comprising 6.60 g of the dimethylvinylsiloxy endblocked polydimethylsiloxane of Preparation B and 274 mg of ($\eta$5-cyclopentadienyl)trimethylplatinum of Preparation D was prepared. Combination of 0.5 g of the catalyst solution with 25.0 g of Base 1, various mixtures of Base 1 and Base 2 totaling 25.0 g, or 25.0 g of Base 2 provided polyorganosiloxane compositions containing 60 percent by weight of the resinous copolymer of Preparation A, from 1.50 to 3.50 percent by weight with respect to the remaining 40 percent by weight of the composition of 1,3,5,7-tetravinyltetramethylcyclotetrasiloxane, and 500 ppm platinum with a silicon-bonded hydrogen to silicon-bonded vinyl ratio of 1.00. These compositions were knife coated at a thickness of 0.05 mm on 0.05 mm thick polyethylene terephthalate film, and the coatings were cured by two passes at a speed of 15 meters per minute under two medium pressure mercury lamps operating at a power of 120 watts per centimeter followed by heating in a forced air oven at 100 °C for 5 minutes to form a tape. Adhesive tapes containing other than 60 percent by weight of the resinous copolymer of Preparation A were prepared in essentially the same fashion. The properties of the adhesive tapes so obtained were determined as follows and are summarized in Table I.

Adhesion was determined as follows. Strips of tape, 2.54 cm wide and approximately 25 cm long, prepared as described above, were adhered to either a glass or a bright annealed steel surface using a 2.04 kg rolled weight, essentially as described in ASTM D-3330. Adhesion was measured by peeling the specimens at an angle of 180° at a rate of 230 cm per minute using an Instrumentors, Inc. model 3M90 slip/peel tester. Aged adhesion data were obtained from samples stored at 70°C in closed containers for six days. Shear strength was measured as follows. Specimens 1.27 cm wide and approximately 8 cm long were adhered to a bright annealed steel surface with an overlap area of 1.27 by 1.27 cm, essentially as described in ASTM D-3654. The samples were suspended vertically and maintained at a temperature of 70°C for 1 hour. A 1,000 gram weight was suspended from the free end of a specimen. Relative shear strength is indicated by the elapsed time before the adhesive bond fails while being maintained at a temperature of 70°C. Tack was measured qualitatively by touching the cured adhesive with a finger.

Table I

| Example | Wt % MQ resin[a] | Wt % $D_4Vi_4$[b] | Adhesion (kg/m) | | | Shear (min) | Tack |
|---|---|---|---|---|---|---|---|
| | | | initial | | aged | | |
| | | | glass | steel | glass | | |
| 1 | 50 | 1.50 | 31 | 33 | 26 | 4 | moderate |
| 2 | 50 | 2.80 | 10 | 19 | 19 | >10,000 | moderate |
| 3 | 55 | 1.50 | 56 | 51 | 59 | 10 | moderate |
| 4 | 55 | 2.50 | 37 | 37 | 32 | 2,000 | moderate |
| 5 | 55 | 2.80 | 33 | 33 | 31 | >10,000 | moderate |
| 6 | 58 | 1.67 | 66 | 68 | 67 | 16 | moderate |
| 7 | 58 | 2.35 | 59 | 58 | 61 | 82 | low |
| 8 | 58 | 2.80 | 56 | 51 | 40 | 1,000 | low |
| 9 | 58 | 3.19 | 42 | 45 | 45 | >10,000 | low |
| 10 | 60 | 1.67 | 78 | 86 | 78 | 99 | moderate |
| 11 | 60 | 2.32 | 75 | 65 | 74 | 343 | low |
| 12 | 60 | 2.79 | 65 | 63 | 65 | 3,000 | low |
| 13 | 60 | 3.19 | 60 | 52 | 51 | >10,000 | low |
| 14 | 65 | 1.50 | 52[c] | 37[c] | -- | 114 | low |
| 15 | 65 | 2.80 | 8[c] | 11[c] | -- | 1,200 | none |

[a]Resinous copolymer
[b]1,3,5,7-Tetravinyltetramethylcyclotetrasiloxane
[c]Adhesion shocky

As can be seen from the data in Table I, shear strength increases while tack decreases with the level of crosslinking agent; adhesion decreases with the level of crosslinking agent and increases with the level of resinous copolymer up to a level of about 60 percent by weight.

EXAMPLES 16 - 20

The compositions of the examples summarized in Table II were prepared in the same manner as were the compositions of Examples 1 to 15, except that the hydrosilation catalyst prepared by the reaction of chloroplatinic acid with sym-divinyltetramethyldisiloxane was used in place of ($\eta$5-cyclopentadienyl)trimethylplatinum. Coated adhesives were cured by heating at 100°C for 5 minutes. As can be seen from the data in Table II, substantially the same adhesive properties are obtained using either the catalyst of Examples 1 - 15 or the catalyst of Examples 16 - 20.

TABLE II

| Example | Wt % MQ resin[a] | Wt % $D_4Vi_4$ [b] | Adhesion (kg/m) | | | Shear (min) | Tack |
|---|---|---|---|---|---|---|---|
| | | | initial | | aged | | |
| | | | glass | steel | glass | | |
| 16 | 58 | 1.80 | 65 | -- | 67 | 45 | moderate |
| 17 | 58 | 2.45 | 59 | -- | 58 | 62 | low |
| 18 | 60 | 1.80 | 76 | -- | 76 | 105 | moderate |
| 19 | 60 | 2.33 | 67 | -- | 69 | 500 | low |
| 20 | 60 | 2.80 | 64 | -- | 61 | 3,000 | low |

[a]Resinous copolymer
[b]1,3,5,7-Tetravinyltetramethylcyclotetrasiloxane.

EXAMPLES 21 - 29

The compositions of the examples summarized in Table III were prepared in essentially the same manner as were the compostions of Examples 1 to 15, except that the quantities were adjusted to provide silicon-bonded hydrogen to silicon-bonded vinyl ratios of from 0.7 to 1.3. Each example incorporated 60 percent by weight of the resinous copolymer of Preparation A, 2.80 percent by weight with respect to the remaining 40 percent by weight of the composition of 1,3,5,7-tetravinyltetramethylcyclotetrasiloxane, and 500 ppm platinum as ($\eta$5-cyclopentadienyl)trimethylplatinum.

Table III

| Example | Ratio of SiH/SiVi[a] | Adhesion (kg/m) | | | Shear (min) | Tack |
|---|---|---|---|---|---|---|
| | | initial | | aged | | |
| | | glass | steel | glass | | |
| 21 | 0.7 | -[b] | -[b] | -[b] | - | moderate |
| 22 | 0.8 | 93 | 86 | 67 | 20 | moderate |
| 23 | 0.9 | 74 | 73 | 70 | 70 | moderate |
| 24 | 0.95 | 67 | 65 | 69 | 50 | low |
| 25 | 1.0 | 64 | 59 | 56 | 288 | low |
| 26 | 1.05 | 53 | 59 | 58 | >10,000 | low |
| 27 | 1.1 | 50 | 52 | 52 | >10,000 | low |
| 28 | 1.2 | 41 | 40 | 17 | >10,000 | low |
| 29 | 1.3 | 22[c] | 28[c] | 4 | - | none |

[a]Ratio of silicon-bonded hydrogen groups to silicone-bonded vinyl groups.
[b]Cohesive failure.
[c]Adhesion shocky.

As can be seen from the data in Table III, a slight excess of silicon bonded hydrogen may be advantageously used to improve the shear strength of the adhesive with minimal reduction in adhesion.

## Claims

**1.** A composition capable of being cured to form a pressure-sensitive adhesive comprising a flowable mixture of:

(a) 50 to 65 parts by weight of a benzene soluble, resinous copolymer having triorganosiloxy and $SiO_{4/2}$ units,

(b) a diorganoalkenylsiloxy endblocked polydiorganosiloxane having the average formula

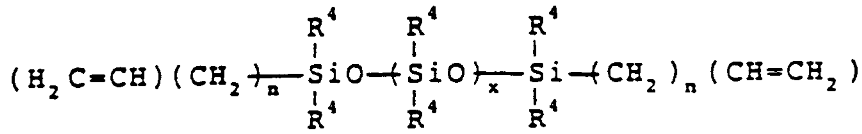

wherein

each $R^4$ independently represents a monovalent group selected from alkyl groups and aryl groups, with at least 70 percent of the $R^4$ groups being methyl,

x is zero or a number having a value up to 1000,

n is zero or a number having a value up to 16.

(c) a diorganohydrogensiloxy endblocked polydiorganosiloxane having the average formula

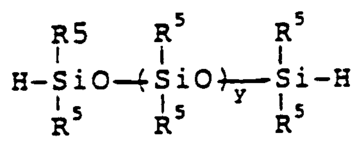

wherein

each $R^5$ independently represents a monovalent group selected from alkyl groups and aryl groups, with at least 70 percent of the $R^5$ groups being methyl, and

y is zero or a number having a value up to 1000.

(d) an organosilicon crosslinking agent containing more than two groups that will react with a silicon-bonded hydrogen of a diorganohydrogensiloxy endblocked polydiorganosiloxane by means of a hydrosilation reaction, the sum of parts by weight of said (b) diorganoalkenylsiloxy endblocked polydiorganosiloxane plus said (c) diorganohydrogensiloxy endblocked polydiorganosiloxane plus said (d) organosilicon crosslinking agent being 50 to 35 parts by weight, and

(e) a hydrosilation catalyst in an amount sufficient to effect the curing of said composition.

**2.** The composition of Claim 1, comprising 50 to 65 parts by weight of component (a) and 50 to 35 parts by weight of components (b) plus (c) plus (d), the ratio of the total number of alkenyl groups present in component (b) and in component (d) that will react with a silicon-bonded hydrogen of a diorganohydrogensiloxy endblocked polydiorganosiloxane by means of a hydrosilation reaction to the total number of silicon-bonded hydrogen atoms present in component (c) plus (d) ranging from 0.8 to 1.2.

**3.** The composition of any preceding claim wherein x is a number having a value of from 15 to 50.

**4.** The composition of any preceding claim wherein each $R^4$ independently represents a monovalent group selected from alkyl groups having 1 to 18 carbon atoms and phenyl group.

**5.** The composition of any preceding claim wherein y is a number having a value of from 15 to 50.

**6.** The composition of any preceding claim wherein each $R^5$ independently represents a monovalent group selected from alkyl groups having 1 to 18 carbon atoms and phenyl group.

**7.** A pressure-sensitive adhesive article comprising a substrate bearing a layer of the cured composition of any preceding claim.

**8.** The pressure-sensitive adhesive article of claim 7 wherein the substrate is flexible.

**Patentansprüche**

**1.** Zusammensetzung, härtbar unter Bildung eines Haftklebstoffes, umfassend eine fließfähige Mischung von:

(a) 50 ... 65 Gewichtsteile eines benzollöslichen, harzartigen Copolymers mit Triorganosiloxy- und $SiO_{4/2}$-Einheiten;

(b) einem Diorganoalkenylsiloxy-endgeblockten Polydiorganosiloxan mit der Durchschnittsformel

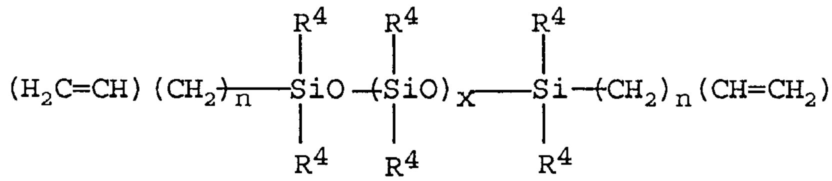

worin sind:

jedes $R^4$ unabhängig eine einwertige Gruppe, ausgewählt aus Alkyl-Gruppen und Aryl-Gruppen, wobei mindestens 70 Prozent der $R^4$-Gruppen Methyl sind, und

x Null oder eine Zahl mit einem Wert bis zu 16;

(c) einem Diorganohydrogensiloxy-endgeblockten Polydiorganosiloxan mit der Durchschnittsformel

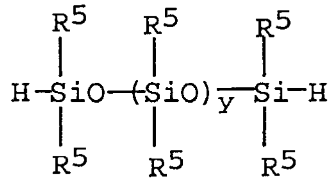

worin sind:

jedes $R^5$ unabhängig eine einwertige Gruppe, ausgewählt aus Alkyl-Gruppen und Aryl-Gruppen, wobei mindestens 70 Prozent der $R^5$-Gruppen Methyl sind, und

y Null oder eine Zahl mit einem Wert bis zu 1.000;

(d) siliciumorganischem Vernetzungsmittel, enthaltend mehr als zwei Gruppen, die mit einem Silicium-gebundenem Wasserstoff eines Diorganohydrogensiloxy-endgeblockten Polydiorganosiloxans über eine Hydrosilylierungsreaktion reagieren; wobei die Summe der Gewichtsteile des (b) Diorganoalkenylsiloxy-endgeblockten Polydiorganosiloxans plus des (c) Diorganohydrogensiloxy-endgeblockten Polydiorganosiloxans plus des (d) siliciumorganischen Vernetzungsmittels 50...35 Gewichtsteile beträgt; sowie

(e) einem Hydrosilylierungs-Katalysator in einer ausreichenden Menge, um das Härten der Zusammensetzung zu bewirken.

**2.** Zusammensetzung nach Anspruch 1, umfassend 50 ... 65 Gewichtsteile Komponente (a) und 50 .. 35 Gewichtsteile von Komponenten (b) plus (c) plus (d), wobei das Verhältnis der Gesamtzahl der Alkenyl-Gruppen, die in Komponente (b) und in Komponente (d) vorliegen, die mit einem Silicium-gebundenen Wasserstoff eines Diorganohydrogensiloxy-endgeblockten Polydiorganosiloxans über eine Hydrosilylierungsreaktion reagieren, zu der Gesamtzahl der Silicium-gebundenen Wasserstoffatome, die in Komponente (c) plus (d) vorliegen, im Bereich von 0,8 .. 1,2 liegt.

**3.** Zusammensetzung nach einem der vorgenannten Ansprüche, bei der x eine Zahl mit einem Wert von 15 ... 50 ist.

**4.** Zusammensetzung nach einem der vorgenannten Ansprüche, bei der jedes $R^4$ unabhängig eine einwertige Gruppe darstellt, ausgewählt aus Alkyl-Gruppen mit 1 ... 18 Kohlenstoffatomen und Phenyl-Gruppe.

**5.** Zusammensetzung nach einem der vorgenannten Ansprüche, bei der y eine Zahl mit einem Wert von 15 ... 50 ist.

**6.** Zusammensetzung nach einem der vorgenannten Ansprüche, bei der jedes $R^5$ unabhängig eine einwertige Gruppe darstellt, ausgewählt aus Alkyl-Gruppen mit 1 ... 18 Kohlenstoffatomen und Phenyl-Gruppe.

7. Haftklebstoffartikel, umfassend ein Substrat mit einer Schicht der gehärteten Zusammensetzung nach einem der vorgenannten Ansprüche.

8. Haftklebstoffartikel nach Anspruch 7, bei welchem das Substrat flexibel ist.

## Revendications

1. Composition pouvant être durcie pour former un adhésif sensible à la pression, ladite composition comprenant un mélange coulable de :
(a) 50 à 65 parties en poids d'un copolymère résineux, soluble dans le benzène, ayant des unités triorganosiloxy et $SiO_{4/2}$,
(b) un polydiorganosiloxane bloqué par la terminaison diorganoalcénylsiloxy et ayant la formule moyenne

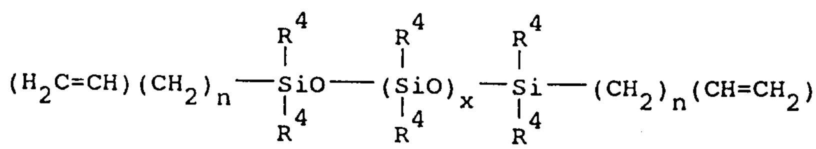

dans laquelle
chaque $R^4$ représente indépendamment un groupe monovalent choisi parmi les groupes alkyle et les groupes aryle, au moins 70 % des groupes $R^4$ étant le groupe méthyle,
x est zéro ou un nombre ayant une valeur allant jusqu'à 1000,
n est zéro ou un nombre ayant une valeur allant jusqu'à 16,
(c) un polydiorganosiloxane bloqué par la terminaison diorganohydrogénosiloxy et ayant la formule moyenne

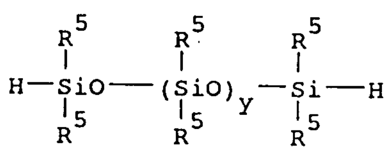

chaque $R^5$ représente indépendamment un groupe monovalent choisi parmi les groupes alkyle et les groupes aryle, au moins 70 % des groupes $R^5$ étant le groupe méthyle, et
y est zéro ou un nombre ayant une valeur allant jusqu'à 1000,
(d) un agent de réticulation organosilicium contenant plus de deux groupes, qui vont réagir avec un hydrogène lié au silicium d'un polydiorganosiloxane bloqué par la terminaison diorganohydrogénosiloxy selon une réaction d'hydrosilation, la somme des parties en poids desdits composants (b) + (c) + (d), i.e. lesdits polydiorganosiloxane bloqué par la terminaison diorganoalcénylsiloxy, polydiorganosiloxane bloqué par la terminaison diorganohydrogénosiloxy et agent de réticulation organosilicium, représentant 50 à 35 parties en poids, et
(e) un catalyseur d'hydrosilation en quantité suffisante pour durcir ladite composition.

2. Composition selon la revendication 1, comprenant 50 à 65 parties en poids du composant (a) et 50 à 35 parties en poids du mélange des composants (b) + (c) + (d), le rapport du nombre total de groupes alcényle présents dans le composant (b) et le composant (d), qui vont réagir avec un hydrogène lié au silicium d'un polydiorganosiloxane bloqué par la terminaison diorganohydrogénosiloxy selon une réaction d'hydrosilation, au nombre total d'atomes d'hydrogène liés au silicium présent dans les composants (c) et (d), étant compris entre 0,8 et 1,2.

3. Composition selon l'une quelconque des revendication précédentes, dans laquelle x est un nombre ayant une valeur de 15 à 50.

**4.** Composition selon l'une quelconque des revendication précédentes, dans laquelle chaque $R^4$ représente indépendamment un groupe monovalent choisi parmi les groupes alkyle en $C_1$-$C_{18}$ et phényle.

**5.** Composition selon l'une quelconque des revendication précédentes, dans laquelle y est un nombre ayant une valeur de 15 à 50.

**6.** Composition selon lune quelconque des revendication précédentes, dans laquelle chaque $R^5$ représente indépendamment un groupe monovalent choisi parmi les groupes alkyle en $C_1$-$C_{18}$ et phényle.

**7.** Article adhésif sensible à la pression, ledit article comprenant un substrat portant une couche durcie de la composition selon l'une quelconque des revendication précédentes.

**8.** Article adhésif sensible à la pression selon la revendication 7, dans lequel le substrat est flexible.